(19) Europäisches Patentamt
European Patent Office
Office européen des brevets

(11) **EP 4 582 329 A1**

(12) **EUROPEAN PATENT APPLICATION**
published in accordance with Art. 153(4) EPC

(43) Date of publication:
**09.07.2025 Bulletin 2025/28**

(21) Application number: **22957385.2**

(22) Date of filing: **31.08.2022**

(51) International Patent Classification (IPC):
***B62D 3/08*** (2006.01)   ***B62D 5/04*** (2006.01)

(52) Cooperative Patent Classification (CPC):
**B62D 5/0421;** B62D 3/08; B62D 5/0409

(86) International application number:
**PCT/JP2022/032752**

(87) International publication number:
**WO 2024/047786 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JTEKT Corporation
Kariya-shi, Aichi 448-8652 (JP)**

(72) Inventors:
• **MURAKAMI Yuuya
Kariya-shi, Aichi 448-8652 (JP)**

• **SUZUKI Takashi
Kariya-shi, Aichi 448-8652 (JP)**
• **OKADA Kotaro
Kariya-shi, Aichi 448-8652 (JP)**
• **TAKAGI Kazuma
Kariya-shi, Aichi 448-8652 (JP)**
• **YAMAMOTO Ryuta
Kariya-shi, Aichi 448-8652 (JP)**
• **TAKEUCHI Taiki
Kariya-shi, Aichi 448-8652 (JP)**

(74) Representative: **Winter, Brandl - Partnerschaft
mbB
Alois-Steinecker-Straße 22
85354 Freising (DE)**

(54) **STEERING DEVICE**

(57)     A steering system (20) includes an actuator including a motor (23) configured to generate torque corresponding to steering of a steering wheel (26) of a vehicle (10) and a speed reducer (25) configured to reduce a speed of rotation of the motor (23), and a ball screw mechanism (48) configured to convert rotation applied through the speed reducer (25) into rotation of an output shaft (44) configured to operate in conjunction with a steered wheel (13). The speed reducer (25) and the ball screw mechanism (48) are configured such that increase and decrease characteristics of a load torque generated relative to a steering direction when the steering wheel (26) is steered are opposite between the speed reducer (25) and the ball screw mechanism (48).

Fig.2

**Description**

TECHNICAL FIELD

The present disclosure relates to a steering system.

BACKGROUND ART

Hitherto, so-called cab-over vehicles such as freight vehicles in which a driver's seat is located forward of a front wheel axle often use an axle suspension in which right and left wheels are connected by an axle. The vehicles including the axle suspension often use a ball screw steering gearbox. The steering gearbox is mounted on, for example, a vehicle body frame.

An electric power steering system of Patent Document 1 includes a motor and a ball screw steering gearbox. The steering gearbox converts a rotational motion of a steering shaft into a swinging motion of a pitman arm. The direction of steered wheels is changed in conjunction with the pitman arm. The torque of the motor is transmitted to a ball screw shaft of the steering gearbox via a worm reducer. This assists steering of a steering wheel.

Related Art Documents

Patent Documents

Patent Document 1: WO2021/0261188

SUMMARY OF THE INVENTION

Problem to be Solved by the Invention

Conventional electric power steering systems including a ball screw steering gearbox, including the one disclosed in Patent Document 1, have the following concerns. That is, when the steering gearbox is mounted on a vehicle, the ball screw shaft is maintained in a posture in which it extends in the vertical direction of the vehicle. A ball screw nut moves along the ball screw shaft that extends in the vertical direction of the vehicle. At this time, gravity acts on the ball screw nut according to the mass. For this reason, when the ball screw mechanism is viewed as a single unit, the load torque of the ball screw mechanism differs depending on the steering direction of the steering wheel, that is, the moving direction of the ball screw nut. The load torque is generated according to resistance generated via balls at a meshing portion between the ball screw nut and the ball screw shaft.

Means for Solving the Problem

A steering system according to one embodiment of the present disclosure includes an actuator including a motor configured to generate torque corresponding to steering of a steering wheel of a vehicle and a speed reducer configured to reduce a speed of rotation of the motor, and a ball screw mechanism configured to convert rotation applied through the speed reducer into rotation of an output shaft configured to operate in conjunction with a steered wheel. The speed reducer and the ball screw mechanism are configured such that increase and decrease characteristics of a load torque generated relative to a steering direction when the steering wheel is steered are opposite between the speed reducer and the ball screw mechanism.

BRIEF DESCRIPTION OF THE DRAWINGS

[FIG. 1] FIG. 1 is a schematic diagram of a steering system according to one embodiment.
[FIG. 2] FIG. 2 is a sectional view of a steering gearbox in FIG. 1.
[FIG. 3A] FIG. 3A is a sectional view of a speed reducer in FIG. 2 that is cut along a direction orthogonal to an axis of a worm wheel.
[FIG. 3B] FIG. 3B is an enlarged sectional view of a portion indicated by reference numeral 3B in FIG. 3A.
[FIG. 4] FIG. 4 is a schematic diagram of the speed reducer in FIG. 3A that includes a worm oriented in a first direction.
[FIG. 5] FIG. 5 is a schematic diagram of the speed reducer in FIG. 3A that includes a worm oriented in a second direction.

[FIG. 6] FIG. 6 is a sectional view of the steering gearbox in FIG. 2 that includes a right-hand thread ball screw shaft.
[FIG. 7] FIG. 7 is a sectional view of the steering gearbox in FIG. 2 that includes a left-hand thread ball screw shaft.

MODES FOR CARRYING OUT THE INVENTION

A steering system according to one embodiment will be described. The steering system is an electric power steering system.

<Overall Configuration>

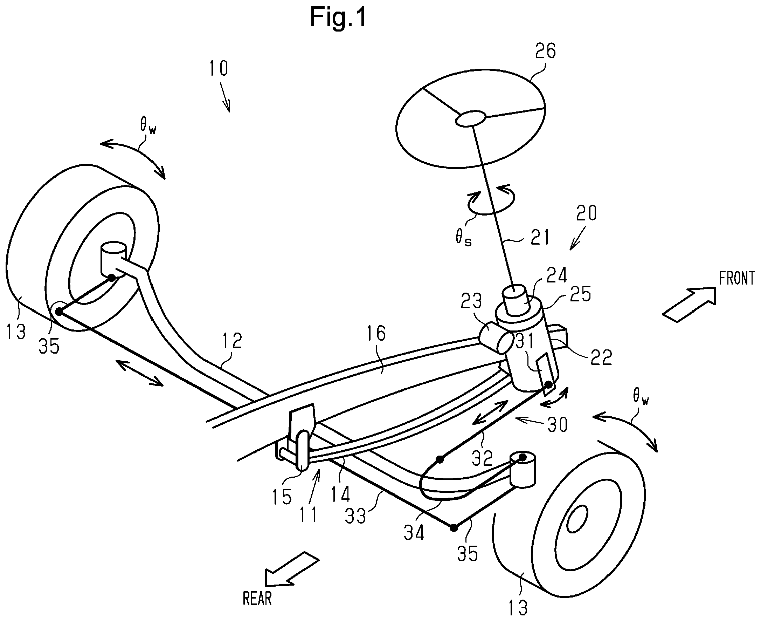

As shown in FIG. 1, a steering system 20 is mounted on, for example, a cab-over vehicle 10. The vehicle 10 includes an axle suspension 11. The suspension 11 supports a front axle 12. Steered wheels 13 that are front wheels are connected to both ends of the front axle 12. The suspension 11 includes a leaf spring 14. As an example, the leaf spring 14 is positioned above the front axle 12. The leaf spring 14 extends in a front-rear direction of the vehicle. Both ends of the leaf spring 14 are attached to a vehicle body frame 16 via support members 15 such as shackles.
The steering system 20 includes a steering shaft 21, a steering gearbox 22, a motor 23, a torque sensor 24, and a speed reducer 25. The steering shaft 21 and the steering gearbox 22 constitute a steering mechanism of the vehicle 10. A first end of the steering shaft 21 is connected to a steering wheel 26. A second end of the steering shaft 21 is connected to the steering gearbox 22 via the torque sensor 24 and the speed reducer 25. The motor 23 is connected to the steering gearbox 22 via the speed reducer 25. The steering gearbox 22 is, for example, of an RBS type (recirculating ball screw type).
The steering gearbox 22 is connected to the steered wheels 13 via a link mechanism 30. The link mechanism 30 includes a pitman arm 31, a drag link 32, and a tie rod 33. The base end of the pitman arm 31 is connected to the side of the steering gearbox 22. The pitman arm 31 is swingable about its base end in the front-rear direction of the vehicle. A first end of the drag link 32 is rotatably connected to the distal end of the pitman arm 31. A second end of the drag link 32 is rotatably connected to a knuckle arm 34 of the right steered wheel 13. Both ends of the tie rod 33 are connected to the right and left steered wheels 13 via tie rod arms 35.
The rotation of the steering wheel 26 is transmitted to the steering gearbox 22 via the steering shaft 21. The steering gearbox 22 converts a rotational motion of the steering shaft 21 into a swinging motion of the pitman arm 31. The swinging motion of the pitman arm 31 drives the drag link 32 in the front-rear direction of the vehicle. The knuckle arm 34 swings in conjunction with the drag link 32, thereby turning the steered wheels 13.
The motor 23 generates torque in the same direction as the steering direction of the steering wheel 26 in response to steering torque detected by the torque sensor 24. The torque of the motor 23 is transmitted to the steering gearbox 22 via the speed reducer 25. That is, the speed reducer 25 is configured to apply torque to the steering gearbox 22. The torque in the same direction as the steering direction is applied to the steering gearbox 22, thereby assisting the steering of the steering wheel 26. The motor 23 and the speed reducer 25 constitute an actuator.

<Configuration of Steering Gearbox 22>

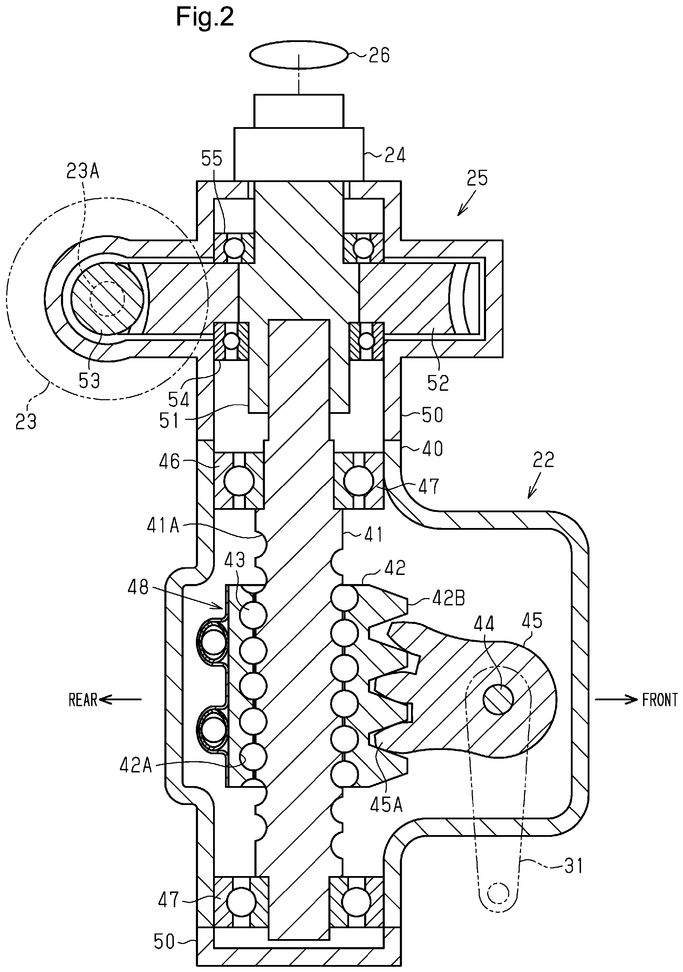

As shown in FIG. 2, the steering gearbox 22 includes a first housing 40. A ball screw shaft 41, a ball screw nut 42, a plurality of balls 43, a sector shaft 44, and a sector gear 45 are provided inside the first housing 40.
When the steering gearbox 22 is mounted on the vehicle 10, the ball screw shaft 41 is maintained in a posture in which it extends in the vertical direction with respect to the vehicle 10. The ball screw shaft 41 is supported via a first bearing 46 and a second bearing 47 to be rotatable relative to the first housing 40. A first end of the ball screw shaft 41 is connected to the steering shaft 21 via the speed reducer 25 and the torque sensor 24 while extending through the first housing 40. The first end is an end of the ball screw shaft 41 oriented upward of the vehicle 10 when the steering gearbox 22 is mounted on the vehicle 10. A second end of the ball screw shaft 41 opposite to the first end is an end of the ball screw shaft 41 oriented downward of the vehicle 10 when the steering gearbox 22 is mounted on the vehicle 10. The second end faces an end wall of the first housing 40.
The ball screw shaft 41 has a first groove 41A. The first groove 41A is a helical groove provided on the outer circumferential surface of the ball screw shaft 41. A threaded portion is formed by providing the first groove 41A. The ball screw shaft 41 is of a right-hand thread type or a left-hand thread type. The threaded portion of the right-hand thread ball screw shaft 41 is a right-hand thread, and the helix direction of the first groove 41A is a clockwise direction as viewed from the first end side. The threaded portion of the left-hand thread ball screw shaft 41 is a left-hand thread, and the helix direction of the first groove 41A is a counterclockwise direction as viewed from the first end side.
The ball screw nut 42 has a tubular shape and has a second groove 42A. The second groove 42A is a helical groove provided on the inner circumferential surface of the ball screw nut 42. The second groove 42A faces the first groove 41A in a radial direction. The ball screw nut 42 engages with the ball screw shaft 41 via the plurality of balls 43. A helical space surrounded by the first groove 41A and the second groove 42A functions as a rolling path along which the balls 43 roll. The ball screw shaft 41, the ball screw nut 42, and the balls 43 constitute a ball screw mechanism 48.

The ball screw nut 42 includes a plurality of rack teeth 42B. The rack teeth 42B are provided on the outer circumferential surface of the ball screw nut 42. The rack teeth 42B are arranged in an axial direction of the ball screw nut 42.

The sector shaft 44 extends in a direction orthogonal to the axis of the ball screw nut 42 (direction orthogonal to the drawing sheet of FIG. 2). The sector shaft 44 is supported via a bearing that is not shown to be rotatable relative to the first housing 40. The sector shaft 44 has an outer end exposed to the outside through the first housing 40. The base end of the pitman arm 31 is fixed to the outer end of the sector shaft 44. The sector shaft 44 is an output shaft of the steering gearbox 22 and operates in conjunction with the steered wheels 13.

The sector gear 45 is provided to the sector shaft 44 to be rotatable together. The sector gear 45 is a gear having a sector shape and has a plurality of teeth 45A. The teeth 45A of the sector gear 45 mesh with the rack teeth 42B of the ball screw nut 42.

The rotation of the steering wheel 26 is transmitted to the ball screw shaft 41 via the steering shaft 21 and the speed reducer 25. As the ball screw shaft 41 rotates, the ball screw nut 42 moves in the axial direction relative to the ball screw shaft 41. Therefore, the sector gear 45 swings about the sector shaft 44. When the sector shaft 44 rotates as the sector gear 45 swings, the pitman arm 31 swings about the sector shaft 44.

In the case where the ball screw shaft 41 is of the right-hand thread type, the ball screw nut 42 moves upward when the ball screw shaft 41 rotates clockwise as viewed from the first end side. In the case where the ball screw shaft 41 is of the right-hand thread type, the ball screw nut 42 moves downward when the ball screw shaft 41 rotates counterclockwise as viewed from the first end side.

In the case where the ball screw shaft 41 is of the left-hand thread type, the ball screw nut 42 moves upward when the ball screw shaft 41 rotates counterclockwise as viewed from the first end side. In the case where the ball screw shaft 41 is of the left-hand thread type, the ball screw nut 42 moves downward when the ball screw shaft 41 rotates clockwise as viewed from the first end side.

When the steering wheel 26 is steered to the right with respect to a neutral steering position, the ball screw shaft 41 rotates clockwise as viewed from the first end side. When the steering wheel 26 is steered to the left with respect to the neutral steering position, the ball screw shaft 41 rotates counterclockwise as viewed from the first end side. The neutral steering position is a position of the steering wheel 26 that corresponds to the vehicle traveling straight ahead.

<Configuration of Speed Reducer 25>

As shown in FIG. 2, the speed reducer 25 is connected to the first end of the ball screw shaft 41. The speed reducer 25 is configured to apply torque to the ball screw mechanism 48. The speed reducer 25 includes a second housing 50. The second housing 50 is connected to the first housing 40 of the steering gearbox 22. The inside of the first housing 40 and the inside of the second housing 50 communicate with each other. The motor 23 is attached to the outside of the second housing 50. An output shaft 23A of the motor 23 extends, for example, in a direction orthogonal to the axis of the ball screw shaft 41 and parallel to the axis of the sector shaft 44. The output shaft 23A extends through the second housing 50 and is inserted into the second housing 50.

A shaft 51, a worm wheel 52, and a worm 53 are provided inside the second housing 50. The worm wheel 52 is connected to the first end of the ball screw shaft 41 to be rotatable together. Details are as follows. That is, the shaft 51 is supported via a third bearing 54 and a fourth bearing 55 to be rotatable relative to the second housing 50. A first end of the shaft 51 is connected to the steering shaft 21 via the torque sensor 24 while extending through the second housing 50. A second end of the shaft 51 is connected to the first end of the ball screw shaft 41 to be rotatable together. The worm wheel 52 is attached to the outer circumferential surface of the shaft 51. The worm wheel 52 is rotatable together with the shaft 51. The worm 53 is provided to the output shaft 23A of the motor 23 to be rotatable together. The axis of the output shaft 23A and the axis of the worm 53 coincide with each other. The worm 53 meshes with the worm wheel 52. The shaft angle between the worm 53 and the worm wheel 52 is, for example, 90°.

The torque of the motor 23 is transmitted to the ball screw shaft 41 via the speed reducer 25. The torque in the same direction as the steering direction of the steering wheel 26 is applied to the ball screw shaft 41, thereby assisting the steering of the steering wheel 26.

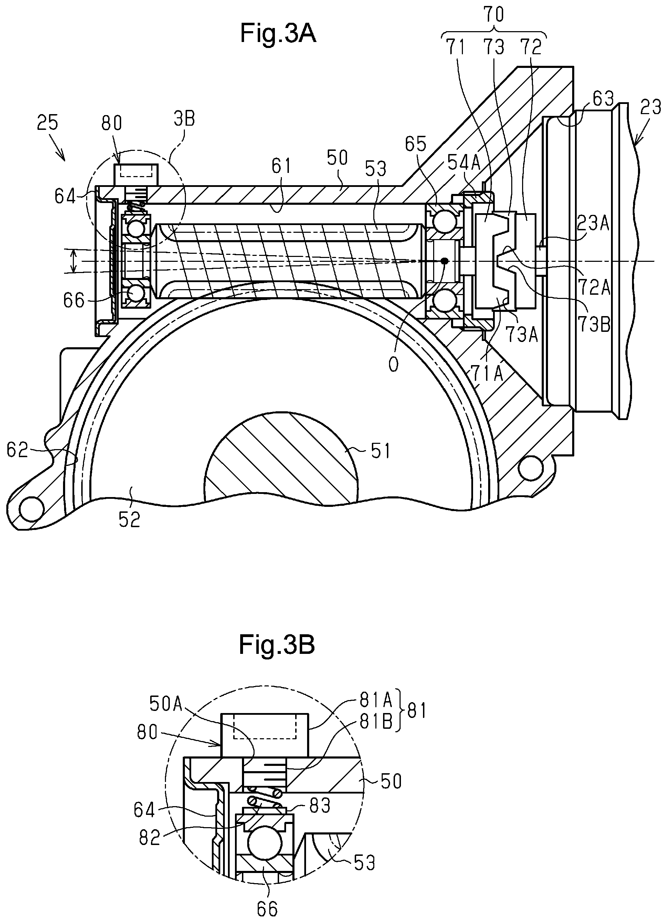

As shown in FIG. 3A, the second housing 50 includes a worm housing portion 61 and a worm wheel housing portion 62. The worm housing portion 61 is a columnar space that houses the worm 53, and extends in an axial direction of the worm 53. The worm wheel housing portion 62 is a columnar space that houses the worm wheel 52, and extends in a direction orthogonal to the axial direction of the worm 53. The worm wheel housing portion 62 is continuous with the worm housing portion 61.

A first end of the worm housing portion 61 communicates with a recessed motor attachment portion 63 provided on the outer surface of the second housing 50. The motor 23 is fixed to the motor attachment portion 63. The output shaft 23A of the motor 23 is inserted into the first end of the worm housing portion 61. A second end of the worm housing portion 61 is open to the outside of the second housing 50. The opening is closed by an end cover 64.

The worm 53 is supported via a fifth bearing 65 and a sixth bearing 66 to be rotatable relative to the inner circumferential surface of the worm housing portion 61. A first end of the worm 53 is supported by the fifth bearing 65. A second end of the worm 53 is supported by the sixth bearing 66. A cylindrical fixing plug 54A is attached to the first end of the worm housing portion 61. An end wall of the fixing plug 54A is in contact with an outer ring of the fifth bearing 65 in the axial direction. This restricts movement of the fifth bearing 65 and furthermore the worm 53 toward the motor 23.

<Shaft Coupling 70>

The first end of the worm 53 is connected to the output shaft 23A of the motor 23 via a shaft coupling 70. The shaft coupling 70 includes a first joint 71, a second joint 72, and an elastic body 73. The elastic body 73 is interposed between the first joint 71 and the second joint 72.

The first joint 71 is connected to the first end of the worm 53 to be rotatable together. The first joint 71 includes a plurality of first engagement claws 71A. The first engagement claws 71A are provided on the side face of the first joint 71 that is in contact with the elastic body 73. The plurality of first engagement claws 71A is provided at equal intervals in a circumferential direction.

The second joint 72 is connected to the output shaft 23A of the motor 23 to be rotatable together. The second joint 72 includes a plurality of second engagement claws 72A. The second engagement claws 72A are provided on the side face of the second joint 72 that is in contact with the elastic body 73. The plurality of second engagement claws 72A is provided at equal intervals in the circumferential direction.

The elastic body 73 has a plurality of first engagement recesses 73A and a plurality of second engagement recesses 73B. The first engagement recesses 73A are provided on the side face of the elastic body 73 that is in contact with the first joint 71. The second engagement recesses 73B are provided on the side face of the elastic body 73 that is in contact with the second joint 72. The first engagement recesses 73A and the second engagement recesses 73B are provided alternately in the circumferential direction of the elastic body 73.

The first engagement claws 71A mesh with the first engagement recesses 73A. The second engagement claws 72A mesh with the second engagement recesses 73B. The first engagement claws 71A engage with the first engagement recesses 73A in the circumferential direction, and the second engagement claws 72A engage with the second engagement recesses 73B in the circumferential direction. Therefore, torque can be transmitted between the worm 53 and the output shaft 23A.

The elastic body 73 is maintained in a slightly compressed state by the first joint 71 and the second joint 72. When an external force is applied to the worm 53 in the radial direction, the elastic body 73 is elastically deformed to allow the worm 53 to tilt relative to the output shaft 23A. The fifth bearing 65 has an internal clearance. The internal clearance is an amount of play between the outer ring, the inner ring, and the balls of the fifth bearing 65. The worm 53 is tiltable relative to the axis of the output shaft 23A about the portion of the worm 53 that is supported by the fifth bearing 65. A swing center O of the worm 53 coincides with the center of the fifth bearing 65 as viewed in an axial direction of the worm wheel 52.

<Urging Mechanism 80>

As shown in FIG. 3A, the speed reducer 25 includes an urging mechanism 80. The urging mechanism 80 is configured to elastically urge the worm 53 toward the worm wheel 52 to adjust backlash of the speed reducer 25.

As shown in FIG. 3B, the urging mechanism 80 includes a bolt 81, a compression coil spring 82, and a pressing member 83. The bolt 81 includes a head 81A and a shank 81B. The shank 81B is tightened to a threaded hole 50A of the second housing 50. The threaded hole 50A is a columnar hole that extends through the peripheral wall of the second housing 50 and is open to the inner circumferential surface of the worm housing portion 61 corresponding to the sixth bearing 66. The compression coil spring 82 is interposed between the shank 81B and the pressing member 83 while being compressed in the axial direction. The pressing member 83 is fixed to the end of the compression coil spring 82 opposite to the shank 81B.

The compression coil spring 82 constantly urges the sixth bearing 66 and furthermore the second end of the worm 53 toward the worm wheel 52 via the pressing member 83. Therefore, a moment acts on the second end of the worm 53 counterclockwise in FIG. 3A about the swing center O of the worm 53. The counterclockwise tilting of the worm 53 is restricted when the worm 53 comes into contact with the worm wheel 52.

By pressing the worm 53 against the worm wheel 52, it is possible to reduce the amount of backlash at the meshing portion between the worm 53 and the worm wheel 52. In addition, the teeth of the worm 53 and the teeth of the worm wheel 52 are expected to wear over time. Even in this case, the worm 53 tilts by an amount corresponding to the wear of the teeth, thereby suppressing an increase in backlash at the meshing portion between the worm 53 and the worm wheel 52.

<Load Torque of Ball Screw Mechanism 48>

Next, supplementary description will be given about load torque of the ball screw mechanism 48. When the steering gearbox 22 is mounted on the vehicle 10, the ball screw shaft 41 is maintained in a posture in which it extends in the vertical direction of the vehicle 10. The ball screw nut 42 moves along the ball screw shaft 41 that extends in the vertical direction of the vehicle 10. At this time, gravity acts on the ball screw nut 42 according to the mass. For this reason, when the ball screw mechanism 48 is viewed as a single unit, the load torque of the ball screw mechanism 48 differs depending on the steering direction of the steering wheel 26, that is, the moving direction of the ball screw nut 42. The load torque is generated according to resistance generated via the balls 43 at the meshing portion between the ball screw nut 42 and the ball screw shaft 41.

<Load Torque for Right-hand Thread Type>

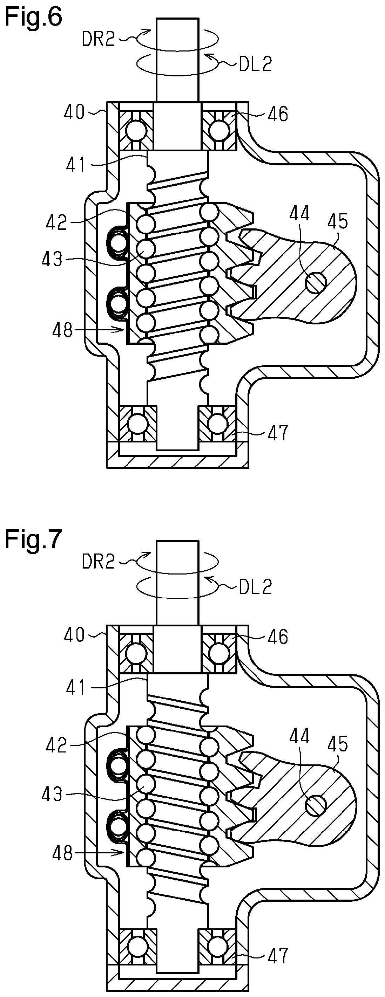

As shown in FIG. 6, the load torque of the ball screw mechanism 48 in the case where the right-hand thread ball screw shaft 41 is used will be considered.
In this case, when the steering wheel 26 is steered to the right, the ball screw shaft 41 rotates in a clockwise direction DR2 as viewed from the first end side. Therefore, the ball screw nut 42 ascends along the ball screw shaft 41. That is, the ball screw nut 42 moves in a direction opposite to the direction in which gravity acts. Thus, the load torque of the ball screw mechanism 48 increases.
When the steering wheel 26 is steered to the left, the ball screw shaft 41 rotates in a counterclockwise direction DL2 as viewed from the first end side. Therefore, the ball screw nut 42 descends along the ball screw shaft 41. That is, the ball screw nut 42 moves in the same direction as the direction in which gravity acts. Thus, the load torque of the ball screw mechanism 48 decreases.
Therefore, as shown in the following expression (3), the absolute value of a load torque $T_{br}$ generated when the steering wheel 26 is steered to the right is larger than the absolute value of a load torque $T_{bl}$ generated when the steering wheel 26 is steered to the left.

$$|T_{bl}| < |T_{br}| \ ... \ (3)$$

<Load Torque for Left-hand Thread Type>

Next, as shown in FIG. 7, the load torque of the ball screw mechanism 48 in the case where the left-hand thread ball screw shaft 41 is used will be considered.
In this case, when the steering wheel 26 is steered to the left, the ball screw shaft 41 rotates in the counterclockwise direction DR2 as viewed from the first end side. Therefore, the ball screw nut 42 ascends along the ball screw shaft 41. That is, the ball screw nut 42 moves in a direction opposite to the direction in which gravity acts. Thus, the load torque of the ball screw mechanism 48 increases.
When the steering wheel 26 is steered to the right, the ball screw shaft 41 rotates in the clockwise direction DR2 as viewed from the first end side. Therefore, the ball screw nut 42 descends along the ball screw shaft 41. That is, the ball screw nut 42 moves in the same direction as the direction in which gravity acts. Thus, the load torque of the ball screw mechanism 48 decreases.
Therefore, as shown in the following expression (4), the absolute value of the load torque $T_{bl}$ generated when the steering wheel 26 is steered to the left is larger than the absolute value of the load torque $T_{br}$ generated when the steering wheel 26 is steered to the right.

$$|T_{bl}| > |T_{br}| \ ... \ (4)$$

<Reaction Force Applied to Worm 53>

Next, a reaction force applied to the worm 53 will be described.
The tooth flank of the worm 53 is twisted relative to the axis of the worm 53. The tooth flank of the worm wheel 52 is twisted relative to the axis of the worm wheel 52. The tooth flank of the worm 53 and the tooth flank of the worm wheel 52 have pressure angles. The pressure angles of two tooth flanks of the teeth of the worm 53 located opposite to each other in the axial direction of the worm 53 are the same. The pressure angles of two tooth flanks of the teeth of the worm wheel 52 located opposite to each other in the rotation direction of the worm wheel 52 are the same. Therefore, a reaction force is applied from the worm wheel 52 to the worm 53 as the worm 53 rotates. The reaction force is applied at the meshing portion between the worm 53 and the worm wheel 52.

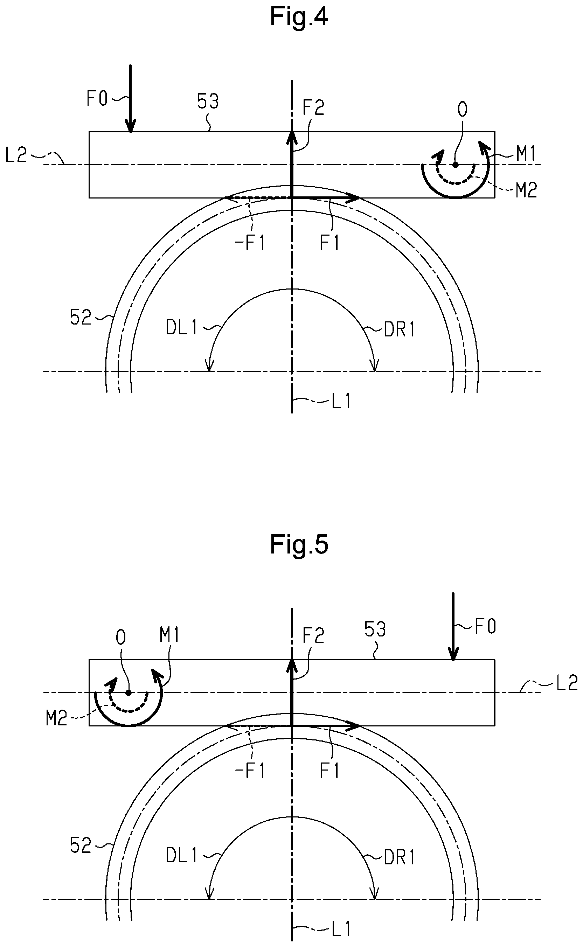

As shown in FIG. 4, the reaction force acting from the worm wheel 52 to the worm 53 includes an axial component force F1 that is a force applied in the axial direction of the worm 53, and a radial component force F2 that is a force applied in the radial direction of the worm 53. When the steering wheel 26 is steered, the reaction force including the axial component force F1 and the radial component force F2 serves as resistance.

The direction of the radial component force F2 is the same between the case where the steering wheel 26 is steered to the right and the case where it is steered to the left. When the magnitude of the torque applied to the steering wheel 26 is the same, the magnitude of the radial component force F2 is the same between the case where the steering wheel 26 is steered to the right and the case where it is steered to the left.

The direction of the axial component force F1 is opposite between the case where the steering wheel 26 is steered to the right and the case where it is steered to the left. When the magnitude of the torque applied to the steering wheel 26 is the same, the magnitude of the axial component force F1 is the same between the case where the steering wheel 26 is steered to the right and the case where it is steered to the left.

When the steering wheel 26 is steered to the right, the worm wheel 52 rotates in a clockwise direction DR1 as viewed in the axial direction. At this time, as indicated by a continuous line in FIG. 4, the direction of the axial component force F1 is a direction from the meshing portion between the worm 53 and the worm wheel 52 toward the first end of the worm 53 (to the right in FIG. 4). The axial component force F1 generated when the steering wheel 26 is steered to the right has, for example, a positive value.

When the steering wheel 26 is steered to the left, the worm wheel 52 rotates in a counterclockwise direction DL1 as viewed in the axial direction. At this time, as indicated by a dashed line in FIG. 4, the direction of the axial component force F1 is a direction from the meshing portion between the worm 53 and the worm wheel 52 toward the second end of the worm 53 (to the left in FIG. 4). If the axial component force F1 generated when the steering wheel 26 is steered to the right has a positive value, the axial component force F1 generated when the steering wheel 26 is steered to the left has a negative value.

The reaction force is applied from the worm wheel 52 to the worm 53 at the meshing portion between the worm 53 and the worm wheel 52. The meshing portion is located at a position offset from the axis of the worm 53 toward the worm wheel 52. Therefore, when the swing center O of the worm 53 is located on the axis of the worm 53, a moment about the swing center O acts on the worm 53 due to the axial component force F1. The direction of the moment about the swing center O is reversed depending on the rotation direction of the worm wheel 52.

Therefore, the load torque of the speed reducer 25 may differ depending on the steering direction of the steering wheel 26, that is, the rotation direction of the worm wheel 52. The load torque is generated according to resistance generated at the meshing portion between the worm wheel 52 and the worm 53.

<Load Torque of Speed Reducer 25 When Worm 53 is Oriented in First Direction>

First, the load torque of the speed reducer 25 generated when the worm 53 is oriented in a first direction shown in FIG. 4 will be considered. The first direction is a direction of the worm 53 in which the second end of the worm 53 is located at the left of a center line L1 of the worm wheel 52 as viewed from the first end side of the shaft 51 to which the steering shaft 21 is connected. The center line L1 is a straight line that extends through the center of the worm wheel 52 and is orthogonal to a center line L2 of the worm 53 as viewed in the axial direction of the worm wheel 52. That is, the second end of the worm 53 is located at the left of the center of the worm wheel 52 in the axial direction of the worm 53. The urging mechanism 80 applies a preload F0 to the second end of the worm 53. The preload F0 is an elastic force generated in a direction toward the worm wheel 52 by the compression coil spring 82 of the urging mechanism 80.

When the worm wheel 52 rotates in the clockwise direction DR1, a counterclockwise moment M1 about the swing center O acts on the worm 53 due to the axial component force F1. The moment M1 is a force that acts about the swing center O to tilt the worm 53 in a direction in which it approaches the worm wheel 52. Therefore, the load torque of the speed reducer 25 increases when the force with which the tooth flanks of the worm 53 and the worm wheel 52 press against each other increases.

When the worm wheel 52 rotates in the counterclockwise direction DL1, a clockwise moment M2 about the swing center O acts on the worm 53 due to the axial component force F1. The moment M2 is a force that acts about the swing center O to tilt the worm 53 in a direction in which it moves away from the worm wheel 52. Therefore, the load torque of the speed reducer 25 decreases when the force with which the tooth flanks of the worm 53 and the worm wheel 52 press against each other decreases.

That is, the speed reducer 25 is configured such that the preload F0 applied by the urging mechanism 80 to the worm 53 when the steering direction is a direction in which the ball screw nut 42 descends is larger than the preload F0 applied by the urging mechanism 80 to the worm 53 when the steering direction is a direction in which the ball screw nut 42 ascends.

Therefore, as shown in the following expression (1), the absolute value of a load torque $T_{dr}$ of the speed reducer 25 generated when the steering wheel 26 is steered to the right is larger than the absolute value of a load torque $T_{dl}$ of the speed reducer 25 generated when the steering wheel 26 is steered to the left. The load torque is also a loss torque generated when the steering wheel 26 is steered.

$$|T_{dr}| > |T_{dl}| \ ... \ (1)$$

When the load torque of the speed reducer 25 differs depending on the steering direction of the steering wheel 26 in this way, the force required for the driver to operate the steering wheel 26 may differ depending on the steering direction. That is, there is a concern that the difference between the force required to steer the steering wheel 26 to the right and the force required to steer the steering wheel 26 to the left increases.

<Load Torque of Speed Reducer 25 When Worm 53 is Oriented in Second Direction>

Next, the load torque of the speed reducer 25 when the worm 53 is oriented in a second direction opposite to the first direction shown in FIG. 4 will be considered.

As shown in FIG. 5, the second direction is a direction of the worm 53 in which the second end of the worm 53 is located at the right of the center line L1 of the worm wheel 52 as viewed from the first end side of the shaft 51 to which the steering shaft 21 is connected. That is, the second end of the worm 53 is located at the right of the center of the worm wheel 52 in the axial direction of the worm 53.

When the worm wheel 52 rotates in the clockwise direction DR1, the counterclockwise moment M1 about the swing center O acts on the worm 53 due to the axial component force F1. The moment M1 is a force that acts about the swing center O to tilt the worm 53 in a direction in which it moves away from the worm wheel 52. Therefore, the load torque of the speed reducer 25 decreases when the force with which the tooth flanks of the worm 53 and the worm wheel 52 press against each other decreases.

When the worm wheel 52 rotates in the counterclockwise direction DL1, the clockwise moment M2 about the swing center O acts on the worm 53 due to the axial component force F1. The moment M2 is a force that acts about the swing center O to tilt the worm 53 in a direction in which it approaches the worm wheel 52. Therefore, the load torque of the speed reducer 25 increases when the force with which the tooth flanks of the worm 53 and the worm wheel 52 press against each other increases.

That is, the speed reducer 25 is configured such that the preload F0 applied by the urging mechanism 80 to the worm 53 when the steering direction is a direction in which the ball screw nut 42 descends is larger than the preload F0 applied by the urging mechanism 80 to the worm 53 when the steering direction is a direction in which the ball screw nut 42 ascends.

Therefore, as shown in the following expression (2), the absolute value of the load torque $T_{dl}$ generated when the steering wheel 26 is steered to the left is larger than the absolute value of the load torque $T_{dr}$ generated when the steering wheel 26 is steered to the right.

$$|T_{dr}| < |T_{dl}| \ ... \ (2)$$

When the worm 53 is oriented in the second direction, the magnitude relationship between the absolute value of the load torque $T_{dr}$ generated when the steering wheel 26 is steered to the right and the absolute value of the load torque $T_{dl}$ generated when the steering wheel 26 is steered to the left is opposite to that when the worm 53 is oriented in the first direction.

Even in this case, when the load torque of the speed reducer 25 differs depending on the steering direction of the steering wheel 26, the force required for the driver to operate the steering wheel 26 may differ depending on the steering direction. That is, there is a concern that the difference between the force required to steer the steering wheel 26 to the right and the force required to steer the steering wheel 26 to the left increases.

Therefore, in the present embodiment, the combination of the direction of the worm 53 and the type of the ball screw shaft 41 is determined focusing on the fact that the load torque of the ball screw mechanism 48 differs depending on the steering direction of the steering wheel 26. There are two combination patterns.

<First Combination>

As shown in Table 1, when the direction of the worm 53 is set to the first direction shown in FIG. 4, the left-hand thread ball screw shaft 41 shown in FIG. 7 is used.

[Table 1]

| Steering direction of steering wheel 26 | Direction of worm 53 (FIG. 4: first direction) | Type of ball screw shaft 41 (FIG. 7: left-hand thread type) |
|---|---|---|
| Steering to right | Load torque of speed reducer 25: large | Load torque of ball screw mechanism 48: small |
| Steering to left | Load torque of speed reducer 25: small | Load torque of ball screw mechanism 48: large |

When the first combination shown in Table 1 is adopted and the steering wheel 26 is steered to the right, the load torque of the speed reducer 25 increases and the load torque of the ball screw shaft 41 decreases. When the steering wheel 26 is steered to the left, the load torque of the speed reducer 25 decreases and the load torque of the ball screw shaft 41 increases. That is, the increase and decrease characteristics of the load torque generated when the steering wheel 26 is steered are opposite between the speed reducer 25 and the ball screw mechanism 48. Therefore, the difference in the total load torque generated by the speed reducer 25 and the ball screw mechanism 48 decreases between the case where the steering wheel 26 is steered to the right and the case where the steering wheel 26 is steered to the left.

<Second Combination>

As shown in Table 2, when the direction of the worm 53 is set to the second direction shown in FIG. 5, the right-hand thread ball screw shaft 41 shown in FIG. 6 is used.

[Table 2]

| Steering direction of steering wheel 26 | Direction of worm 53 (FIG. 5: second direction) | Type of ball screw shaft 41 (FIG. 6: right-hand thread type) |
|---|---|---|
| Steering to right | Load torque of speed reducer 25: small | Load torque of ball screw mechanism 48: large |
| Steering to left | Load torque of speed reducer 25: large | Load torque of ball screw mechanism 48: small |

When the second combination shown in Table 2 is adopted and the steering wheel 26 is steered to the right, the load torque of the speed reducer 25 decreases and the load torque of the ball screw shaft 41 increases. When the steering wheel 26 is steered to the left, the load torque of the speed reducer 25 increases and the load torque of the ball screw shaft 41 decreases. That is, the increase and decrease characteristics of the load torque generated when the steering wheel 26 is steered are opposite between the speed reducer 25 and the ball screw mechanism 48. Therefore, the difference in the total load torque generated by the speed reducer 25 and the ball screw mechanism 48 decreases between the case where the steering wheel 26 is steered to the right and the case where the steering wheel 26 is steered to the left.

<Effects of Embodiment>

The present embodiment has the following effects.

(1) The speed reducer 25 and the ball screw mechanism 48 are configured such that the increase and decrease characteristics of the load torque generated when the steering wheel 26 is steered are opposite between the speed reducer 25 and the ball screw mechanism 48. Therefore, the difference in the total load torque generated by the speed reducer 25 and the ball screw mechanism 48 decreases between the case where the steering wheel 26 is steered to the right and the case where the steering wheel 26 is steered to the left. Therefore, the difference between the force required to steer the steering wheel 26 to the right and the force required to steer the steering wheel 26 to the left can be reduced.
(2) When the direction of the worm 53 is set to the first direction shown in FIG. 4, the left-hand thread ball screw shaft 41 shown in FIG. 7 is used. In this way, the increase and decrease characteristics of the load torque of the speed reducer 25 and the increase and decrease characteristics of the load torque of the ball screw mechanism 48 can be reversed in each of the case where the steering wheel 26 is steered to the right and the case where the steering wheel 26 is steered to the left.
(3) When the direction of the worm 53 is set to the second direction shown in FIG. 5, the right-hand thread ball screw shaft 41 shown in FIG. 6 is used. In this way as well, the increase and decrease characteristics of the load torque of the speed reducer 25 and the increase and decrease characteristics of the load torque of the ball screw mechanism 48 can be reversed in each of the case where the steering wheel 26 is steered to the right and the case where the steering wheel 26 is steered to the left.

(4) Depending on the specifications of the steering system 20, either the first combination shown in Table 1 or the second combination shown in Table 2 can be selected as the combination of the direction of the worm 53 and the type of the ball screw shaft 41. The product variations of the steering system 20 can be increased.

<Other Embodiments>

The present embodiment may be modified as follows.

- The posture of the steering gearbox 22 when it is mounted on the vehicle 10 may be changed as appropriate as long as gravity acts in the moving direction of the ball screw nut 42.

    - To further reduce the right and left difference in the load torque generated relative to the steering direction when the steering wheel 26 is steered, ideally to 0 (zero), the motor 23 may be controlled as follows. That is, the motor 23 is controlled so that the torque applied to the ball screw mechanism 48 when the steering direction is a direction in which the ball screw nut 42 descends is smaller than the torque applied to the ball screw mechanism 48 when the steering direction is a direction in which the ball screw nut 42 ascends. The motor 23 is controlled, for example, by a control device of the steering system 20.

In this way, the right and left difference in the load torque generated by the ball screw mechanism 48 when the steering wheel 26 is steered is further reduced. The right and left difference is the difference between the load torque when the steering wheel 26 is steered to the right and the load torque when the steering wheel 26 is steered to the left. Therefore, the right and left difference in the total load torque generated by the speed reducer 25 and the ball screw mechanism 48 can further be reduced compared to the case where the increase and decrease characteristics of the load torque generated when the steering wheel 26 is steered are only opposite between the speed reducer 25 and the ball screw mechanism 48.

- A configuration in which the urging mechanism 80 is omitted may be adopted as that of the speed reducer 25. The worm 53 need not be tiltable relative to the output shaft 23A of the motor 23. In this case, the right and left difference in the load torque generated by the speed reducer 25 when the steering wheel 26 is steered can basically be ignored. Therefore, focus only needs to be put on the right and left difference in the load torque generated by the ball screw mechanism 48 when the steering wheel 26 is steered.

To reduce the right and left difference in the load torque generated by the ball screw mechanism 48 relative to the steering direction when the steering wheel 26 is steered, ideally to 0 (zero), the motor 23 may be controlled as follows. That is, the motor 23 is controlled so that the torque applied to the ball screw mechanism 48 when the steering direction is a direction in which the ball screw nut 42 descends is smaller than the torque applied to the ball screw mechanism 48 when the steering direction is a direction in which the ball screw nut 42 ascends. In this way, the right and left difference in the load torque generated by the ball screw mechanism 48 when the steering wheel 26 is steered can be reduced, ideally to 0. The increase and decrease characteristics of the load torque of the ball screw mechanism 48 are generated by controlling the motor 23.

In this case, a combination different from the combinations shown in Tables 1 and 2 above can be adopted as the combination of the direction of the worm 53 and the type of the ball screw shaft 41 (left-hand thread type or right-hand thread type). For example, when the direction of the worm 53 is the first direction, the right-hand thread ball screw shaft 41 may be adopted. When the direction of the worm 53 is the second direction, the left-hand thread ball screw shaft 41 may be adopted.

- The combinations shown in Tables 1 and 2 above need not be adopted as the combination of the direction of the worm 53 and the type of the ball screw shaft 41 (left-hand thread type or right-hand thread type). In this case, to reduce the right and left difference in the load torque generated relative to the steering direction when the steering wheel 26 is steered, ideally to 0 (zero), the motor 23 may be controlled as follows. That is, the motor 23 is controlled so that the torque applied to the ball screw mechanism 48 when the steering direction is a direction in which the ball screw nut 42 descends is smaller than the torque applied to the ball screw mechanism 48 when the steering direction is a direction in which the ball screw nut 42 ascends. In this way, the right and left difference in the load torque generated by the ball screw mechanism 48 when the steering wheel 26 is steered can be reduced, ideally to 0. The increase and decrease characteristics of the load torque of the ball screw mechanism 48 are generated by controlling the motor 23. Therefore, the right and left difference in the total load torque generated by the speed reducer 25 and the ball screw mechanism 48 can be reduced by an amount corresponding to the reduction in the right and left difference in the load torque generated by the ball screw mechanism 48.

- The steering system 20 may be a steer-by-wire steering system. A so-called linkless structure in which the power transmission between the steering wheel 26 and the steered wheels 13 is separated may be adopted as the structure of the steering system 20. A structure in which the power transmission between the steering wheel 26 and the steered wheels 13 can be separated by a clutch may be adopted as the structure of the steering system 20. When the clutch is disengaged, the power transmission between the steering wheel 26 and the steered wheels 13 is cut off. When the clutch is engaged, the power transmission between the steering wheel 16 and the steered wheels 13 is connected.

**Claims**

1. A steering system comprising:

   an actuator including a motor configured to generate torque corresponding to steering of a steering wheel of a vehicle and a speed reducer configured to reduce a speed of rotation of the motor; and
   a ball screw mechanism configured to convert rotation applied through the speed reducer into rotation of an output shaft configured to operate in conjunction with a steered wheel, wherein the speed reducer and the ball screw mechanism are configured such that increase and decrease characteristics of a load torque generated relative to a steering direction when the steering wheel is steered are opposite between the speed reducer and the ball screw mechanism.

2. The steering system according to claim 1, wherein

   the ball screw mechanism includes a ball screw shaft to which rotation is applied through the speed reducer, the ball screw shaft extending in a vertical direction with respect to the vehicle, a plurality of balls, and a ball screw nut driven onto the ball screw shaft via the balls,
   the speed reducer includes:

      a worm including a first end tiltably connected to the motor and a second end opposite to the first end;
      a worm wheel that is provided to be rotatable together with the ball screw shaft and that is configured to mesh with the worm; and
      an urging mechanism configured to apply a preload to the second end of the worm in a direction toward the worm wheel, and

   the speed reducer is configured such that the preload applied by the urging mechanism to the worm when the steering direction is a direction in which the ball screw nut descends is larger than the preload applied by the urging mechanism to the worm when the steering direction is a direction in which the ball screw nut ascends.

3. The steering system according to claim 2, wherein

   the increase and decrease characteristics of the load torque of the ball screw mechanism are generated by controlling the motor, and
   the motor is controlled, to eliminate a difference in the load torque generated relative to the steering direction when the steering wheel is steered, so that the torque applied to the ball screw mechanism when the steering direction is the direction in which the ball screw nut descends is smaller than the torque applied to the ball screw mechanism when the steering direction is the direction in which the ball screw nut ascends.

4. The steering system according to claim 1, wherein

   the ball screw mechanism includes a ball screw shaft to which rotation is applied through the speed reducer, the ball screw shaft extending in a vertical direction with respect to the vehicle, a plurality of balls, and a ball screw nut driven onto the ball screw shaft via the balls,
   the increase and decrease characteristics of the load torque of the ball screw mechanism are generated by controlling the motor, and
   the motor is controlled, to eliminate a difference in the load torque generated relative to the steering direction when the steering wheel is steered, so that the torque applied to the ball screw mechanism when the steering direction is a direction in which the ball screw nut descends is smaller than the torque applied to the ball screw mechanism when the steering direction is a direction in which the ball screw nut ascends.

5. The steering system according to claim 4, wherein the speed reducer includes:

a worm including a first end tiltably connected to the motor and a second end opposite to the first end;
a worm wheel that is provided to be rotatable together with the ball screw shaft and that is configured to mesh with the worm; and
an urging mechanism configured to apply a preload to the second end of the worm in a direction toward the worm wheel.

6. The steering system according to claim 1, wherein

the ball screw mechanism includes a ball screw shaft to which rotation is applied through the speed reducer, the ball screw shaft extending in a vertical direction with respect to the vehicle, a plurality of balls, and a ball screw nut driven onto the ball screw shaft via the balls,
the speed reducer includes:

a worm including a first end tiltably connected to the motor and a second end opposite to the first end;
a worm wheel that is connected to an end of the ball screw shaft to be rotatable together and that is configured to mesh with the worm; and

an urging mechanism configured to apply a preload to the second end of the worm in a direction toward the worm wheel, and
the second end of the worm is located at left of a center of the worm wheel in an axial direction of the worm as viewed from the end of the ball screw shaft to which the worm wheel is connected, and the ball screw shaft is of a left-hand thread type and has a helical groove that winds counterclockwise as viewed from the end of the ball screw shaft connected to the worm wheel, or
the second end of the worm is located at right of the center of the worm wheel in the axial direction of the worm as viewed from the end of the ball screw shaft to which the worm wheel is connected, and the ball screw shaft is of a right-hand thread type and has a helical groove that winds clockwise as viewed from the end of the ball screw shaft connected to the worm wheel.

Fig.1

# Fig.2

## Fig.3A

## Fig.3B

# Fig.4

# Fig.5

## Fig.6

## Fig.7

## INTERNATIONAL SEARCH REPORT

| International application No. |
|---|
| **PCT/JP2022/032752** |

**A. CLASSIFICATION OF SUBJECT MATTER**

**B62D 3/08**(2006.01)i; **B62D 5/04**(2006.01)i
FI: B62D3/08 Z; B62D5/04

According to International Patent Classification (IPC) or to both national classification and IPC

**B. FIELDS SEARCHED**

Minimum documentation searched (classification system followed by classification symbols)

B62D3/06, 5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0051432 A (HYUNDAI MOBIS CO., LTD.) 10 May 2021 (2021-05-10) | 1 |
| | paragraphs [0030]-[0039], fig. 1-6 | |
| Y | paragraphs [0030]-[0039], fig. 1-6 | 2, 6 |
| A | | 3-5 |
| Y | JP 2012-101649 A (JTEKT CORP) 31 May 2012 (2012-05-31) | 2, 6 |
| | paragraphs [0002]-[0003] | |
| Y | JP 2013-173440 A (KAYABA INDUSTRY CO., LTD.) 05 September 2013 (2013-09-05) | 2, 6 |
| | paragraph [0002] | |
| Y | JP 2013-210005 A (SHOWA CORP) 10 October 2013 (2013-10-10) | 2, 6 |
| | paragraph [0005] | |
| A | JP 2019-156082 A (KNORR BREMSE STEERING SYSTEM JAPAN CO LTD) 19 September 2019 (2019-09-19) | 1-6 |
| A | US 2021/0261188 A1 (MANDO CORPORATION) 26 August 2021 (2021-08-26) | 1-6 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/032752**

| Patent document cited in search report | | | Publication date (day/month/year) | Patent family member(s) | | | Publication date (day/month/year) |
|---|---|---|---|---|---|---|---|
| KR | 10-2021-0051432 | A | 10 May 2021 | (Family: none) | | | |
| JP | 2012-101649 | A | 31 May 2012 | US | 2012/0111657 | A1 | |
| | | | | paragraphs [0005]-[0006] | | | |
| | | | | EP | 2450262 | A1 | |
| | | | | CN | 102530057 | A | |
| JP | 2013-173440 | A | 05 September 2013 | US | 2015/0041241 | A1 | |
| | | | | paragraph [0002] | | | |
| | | | | WO | 2013/125337 | A1 | |
| | | | | EP | 2818386 | A1 | |
| | | | | CN | 104144842 | A | |
| JP | 2013-210005 | A | 10 October 2013 | (Family: none) | | | |
| JP | 2019-156082 | A | 19 September 2019 | (Family: none) | | | |
| US | 2021/0261188 | A1 | 26 August 2021 | WO | 2020/004897 | A1 | |
| | | | | DE | 112019003315 | T5 | |
| | | | | CN | 112585055 | A | |

Form PCT/ISA/210 (patent family annex) (January 2015)

**EP 4 582 329 A1**

**Patent documents cited in the description**

- WO 20210261188 A